# EUROPEAN PATENT APPLICATION

(11) **EP 2 196 515 A1**
(43) Date of publication of application: **16.06.2010**
(21) Application number: 08835169.7
(22) Date of filing: 01.10.2008
(51) Int. Cl.: C09K 3/10, C08K 3/34, C08L 83/05, C08L 83/07, G02F 1/1339

(54) **SEALING AGENT FOR DISPLAY ELEMENT**

(30) Priority: 01.10.2007 JP 2007257251
(71) Applicant: Momentive Performance Materials Japan LLC, Tokyo 107-6112 (JP)
(72) Inventor: TAKANASHI, Masanori, Tokyo 107-6112, (JP)
(74) Representative: Müller-Boré & Partner Patentanwälte
(86) International application number: PCT/JP2008/067800
(87) International publication number: WO 2009/044763

(57) **Abstract**

This is to provide a sealing agent for a display element which shows not only good elasticity, adhesiveness and durability which are characteristic features of the polyorganosiloxane, but also low moisture permeability after curing.

It is a sealing agent for a display element comprising (A) 100 parts by weight of a linear polyorganosiloxane represented by the formula (I); (B) a polyorganohydrogen siloxane having hydrogen atoms bonded to a silicon atom in a number of exceeding 2 in the molecule in an amount where a number of hydrogen atoms bonded to a silicon atom per one alkenyl group existing in (A) being 0.5 to 10.0; (C) a compound of a platinum group metal in an amount where a platinum group metal atom being contained with 0.1 to 1,000 ppm by weight based on the amount of (A); and (D) 20 to 200 parts by weight of mica powder.

## Description

### TECHNICAL FIELD

The present invention relates to a sealing agent for a display element which cures by an addition reaction of a polyorganosiloxane, and a display device sealed by the said sealing agent for the display element.

### BACKGROUND ART

A sealing agent used in a manufacturing process of a flat display device represented by a liquid crystal display device is an element which can affect on the characteristics of a final product. For example, a liquid crystal display device is manufactured by providing an array substrate (TFT substrate) in which a plural number of thin film transistors (TFT) are formed in a matrix state, and a color filter substrate (CF substrate) in which a color film or a light-shielding film is formed with an extremely narrow gap with an opposed position, and encapsulating a liquid crystal between both substrates. At this time, the TFT substrate and the CF substrate are adhered by using a sealing agent which is being cured, so that adhesiveness and durability of the sealing agent can affect on the characteristics of the liquid crystal element.

As the above-mentioned sealing agent, an epoxy resin has heretofore been generally used (see Patent Literatures 1 to 3). However, a cured product of the epoxy resin is generally hard, so that some problems are raised in some cases due to the hardness when it is used for the purpose of a sealing agent. Also, in the background of requirements for diversification of display functions and high reliability in recent years, development of a material having better adhesiveness and durability has been earnestly expected.

By the way, it has been known that a polyorganosiloxane cures to give a rubbery elastomer, and is a resin which gives good adhesiveness and durability. However, it has large gaps between molecular chains so that moisture permeability is large and it is inferior in moisture resistance, so that it has been difficultly used as a sealing agent for a display element such as a liquid crystal display device, etc.

[Patent Literature 1] JP 2006-124698A
[Patent Literature 2] JP 2006-323039A
[Patent Literature 3] JP 2006-330301A

### DISCLOSURE OF THE INVENTION

### Problems to be solved by the invention

An object of the present invention is to provide a sealing agent for a display element which shows not only good elasticity, adhesiveness and durability which are characteristics of a polyorganosiloxane, but also low moisture permeability after curing. A further object of the present invention is to provide a flat display device using the sealing agent for a display element which shows such a good elasticity, adhesiveness and durability, as well as low moisture permeability.

### Means to solve the problems

The present inventor has carried out earnest studies to solve the above-mentioned problems, and as a result, he has found that the problems can be solved by a sealing agent for a display element which uses a specific linear polyorganosiloxane as a base polymer, with mica powder in combination, whereby he has accomplished the present invention.

That is, the present invention comprises a sealing agent for a display element which contains
(A) 100 parts by weight of a linear polyorganosiloxane represented by the formula (I): 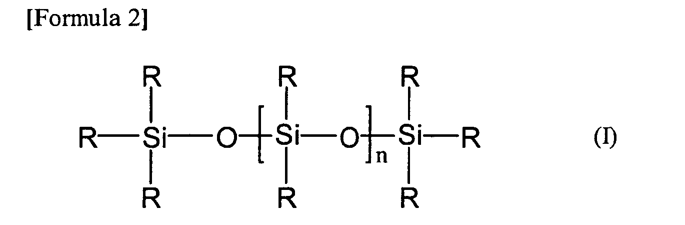 (wherein
   R independently represent R¹ or R², and among Rs, at least two of which are R¹s,
   R¹s independently represent a C₂-C₆ alkenyl group,
   R²s independently represent a C₁-C₆ alkyl group or a phenyl group, and
   n is a number which makes a viscosity of (A) at 23°C 0.1 to 1,000 Pa·s);
(B) a polyorganohydrogen siloxane having hydrogen atoms bonded to a silicon atom in a number of exceeding 2 in the molecule in an amount where a number of hydrogen atoms bonded to a silicon atom per one alkenyl group existing in (A) being 0.5 to 10.0;
(C) a compound of a platinum group metal in an amount where a platinum group metal atom being contained with 0.1 to 1,000 ppm by weight based on the amount of (A); and
(D) 20 to 200 parts by weight of mica powder,
   and a flat display device sealed by the said sealing agent for a display element.

### EFFECTS OF THE INVENTION

According to the present invention, a sealing agent for a display element which cures by heating within a short period of time, and shows not only good elasticity, adhesiveness and durability which are characteristics of a polyorganosiloxane, but also low moisture permeability can be provided. Accordingly, in a flat display device sealed by the sealing agent for a display element of the present invention, the sealed portion shows not only good elasticity, adhesiveness and durability, but also low moisture permeability, so that it can comply with the requirements of diversification of display functions, and high reliability.

### BEST MODE TO CARRY OUT THE INVENTION

Component (A) to be used in the present invention is a linear polyorganosiloxane represented by the formula (I):

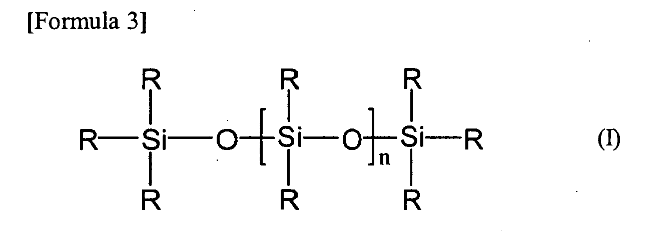

(wherein
R independently represent R¹ or R², and among Rs, at least two of which are R¹s,
R¹s independently represent a C₂-C₆ alkenyl group,
R²s independently represent a C₁-C₆ alkyl group or a phenyl group, and
n is a number which makes a viscosity of (A) at 23°C 0.1 to 1,000 Pa·s).

This Component (A) is a component which becomes a base polymer in the sealing agent for a display element of the present invention, and it forms a network structure by an addition reaction of R¹ in the formula (I) and a hydrosilyl group in Component (B) to form a cured product.

In the formula (I), R¹ is a C₂-C₆ alkenyl group, and they may be a branched or linear, and may be exemplified by vinyl, allyl, 3-butenyl, 5-hexenyl, etc. Of these, a vinyl group is most preferred in the points that synthesis is easy and also it does not impair flowability of the sealing agent for a display element and heat resistance of the cured product. R¹ exist at least 2 in the formula (I). At this time, R¹ may exist at any siloxane unit of the molecule, but to obtain a good reactivity, at least part of R¹ is preferably present at the end(s) of the molecule, and more preferably, R¹ is present at the respective ends of the molecule with each one, and two in total.

In the formula (I), R² is a C₁-C₆ alkyl group or a phenyl group. The C₁-C₆ alkyl group may be branched or linear, and may be exemplified by methyl, ethyl, propyl, etc., and a methyl group is particularly preferred since synthesis and handling thereof are easy, and a cured product excellent in thermal properties and mechanical properties is provided.

To decrease the moisture permeability, 15 mol% or more of R² is preferably a phenyl group. Moreover, in view of handling properties, 20 to 80 mol% of R² is preferably a phenyl group, more preferably 30 to 60 mol%. To introduce such a phenyl group, a siloxane unit having two phenyl groups is preferably used.

In the formula (I), n is a number which makes a viscosity of Component (A) at 23°C 0.1 to 1,000 Pa·s. If the viscosity is within the range, fluidity of the sealing agent for a display element is good, and it shows excellent workability, while it can give a cured product having an excellent mechanical strength, and suitable elasticity and hardness. n is preferably a number which makes a viscosity of Component (A) at 23°C 0.2 to 500 Pa·s.

The polyorganohydrogen siloxane of Component (B) to be used in the present invention is a material which acts as a cross-linking agent of Component (A) by subjecting to an addition reaction between the hydrosilyl group contained in the molecule and R¹ of Component (A). Such Component (B) which acts as a cross-linking agent preferably has a hydrogen atom bonded to a silicon atom which pertains to said addition reaction with a number of exceeding 2 in the molecule, preferably 3 or more to form a network structure of a cured product.

Component (B) representatively has a unit represented by the formula (II):

(R³)_{c}H_{d}SiO_{(4-c-d)/2} (II)

(wherein
R³ represents an unsubstituted or substituted monovalent hydrocarbon group which does not contain aliphatic unsaturated carbon-carbon bond;
c is an integer of 0 to 2;
d is 1 or 2, provided that c+d is an integer of 1 to 3)
with a number of exceeding 2 in the molecule, preferably 3 or more.

As the organic group bonded to a silicon atom of the other siloxane unit of R³ and Component (B), the same groups as R² of the above-mentioned Component (A) are exemplified, and of these, a methyl group is most preferred since synthesis is easy. Also, d is preferably 1 since synthesis is easy.

The siloxane skeleton of Component (B) may be either a linear, branched or cyclic one. Also, a mixture thereof may be used. As the branched one, a branched polymethylhydrogen siloxane comprising a SiO_{4/2} unit and a R³(CH₃)₂SiO_{1/2} unit (wherein R³ is a hydrogen or a C₁-C₆ alkyl group ), and having hydrogen atom bonded to a silicon atom in a number of exceeding 2 in the molecule is preferred in the points of compatibility with Component (A) and reducing moisture permeability. A ratio of the R³(CH₃)₂SiO_{1/2} unit and the SiO_{4/2} unit is preferably 1.5 to 2.2 mol of the R³(CH₃)₂SiO_{1/2} unit based on 1 mol of the SiO₂ unit, more preferably 1.8 to 2.1 mol since it has a suitable viscosity which can be handled easily. Typically, those in which 4 to 5 Q units form a cyclic siloxane skeleton, and 2 M' units are bonded to each Q unit are mentioned such as [R³(CH₃)₂SiO_{1/2}]₈[SiO_{4/2}]₄ or [R³(CH₃)₂SiO_{1/2}]₁₀[SiO_{4/2}]₅.

A polymerization degree of Component (B) is not specifically limited, and it is difficult to synthesize a polyorganohydrogen siloxane in which 2 or more hydrogen atoms are bonded to the same silicon atom, so that it preferably comprises 3 or more siloxane units. A number of siloxane units is more preferably 6 to 200, particularly preferably 10 to 150 since the material does not volatize even when it is heated at a curing temperature, and excellent in fluidity whereby easily mixed with Component (A).

A formulation amount of Component (B) is such an amount that a ratio (H/Vi) of a hydrogen atom bonded to a silicon atom in Component (B) to R¹ group in Component (A) being 0.5 to 10.0, preferably 1.0 to 5.0 since sufficient adhesion strength can be obtained and a cured product having excellent mechanical properties can be obtained. If the H/Vi is less than 0.5, a rubbery elastomer having excellent mechanical strength cannot be obtained, while if it exceeds 10.0, there is a tendency of foaming at the time of curing, and heat resistance of the cured product is markedly worsened.

The compound of a platinum group metal of Component (C) to be used in the present invention is a catalyst to accelerate the addition reaction between R¹ in Component (A) and a hydrosilyl group in Component (B). As the compound of a platinum group metal, there may be used a compound of a platinum group metal atom such as platinum, rhodium, palladium, etc., and may be exemplified by a platinum compound such as chloroplatinic acid, a reaction product of chloroplatinic acid and an alcohol, a platinum-olefin complex, a platinum-vinylsiloxane complex, a platinum-ketone complex, a platinum-phosphine complex, etc.; a rhodium compound such as a rhodium-phosphine complex, a rhodium-sulfide complex, etc.; and a palladium compound such as a palladium-phosphine complex, etc.

Of these, a reaction product of chloroplatinic acid and an alcohol, and a platinum-vinylsiloxane complex are preferred in the point of having good catalytic activity, and when it is necessary to cure the composition within a short period of time to show good adhesiveness, platinum-1,3-divinyl-1,1,3,3-tetramethyldisiloxane complex and platinum-1,3,5,7-tetravinyl-1,3,5,7-tetramethylcyclotetrasiloxane are preferred. However, a necessary curing rate may vary depending on a shape of the portion for which a cured product is provided, and a working time necessary for manufacturing the same, so that it can be optionally selected depending on a combination of Component (C) and a curing retardant.

A formulation amount of Component (C) is generally 0.1 to 1,000 ppm by weight in terms of a platinum group metal atom based on the total amount of Component (A) and Component (B), preferably 0.5 to 200 ppm by weight, since an excellent curing rate can be obtained. If it is less than 0.1 ppm by weight, the curing rate is slow, while if it exceeds 1,000 ppm by weight, acceleration of the curing rate in proportion to the added amount cannot be obtained.

Component (D) to be used in the present invention is a component which lowers moisture permeability of the cured product of the sealing agent for a display element according to the present invention coupled with Component (A). Component (D) gives an effect of lowering moisture permeability, and gives moldability, particularly a bead with a smooth surface can be obtained by extrusion, so that an average particle size thereof is preferably 2.0 to 100 µm, more preferably 5.0 to 60 µm. As Component (D), there may be mentioned a natural mica such as white mica (Muscovite Mica), gold mica (Phlogopite Mica), black mica, etc., and synthetic mica. Of these, white mica is preferred since it contains less impurity and provides excellent mechanical properties to rubbery elastomer as a cured product. These micas are generally flat powder, and here, the particle diameter means a maximum diameter of the flat surface.

A formulation amount of Component (D) is 20 to 200 parts by weight based on 100 parts by weight of Component (A), preferably 40 to 100 parts by weight in the points of effectively lowering moisture permeability, and giving suitable hardness after curing.

In the sealing agent for a display element of the present invention, an adhesiveness-imparting agent can be formulated within a range which does not inhibit a catalyst activity of Component (C). As the adhesiveness-imparting agent, there may be exemplified by a 3-glycidoxypropyl group-containing alkoxysilane such as 3-glycidoxypropyltrimethoxysilane, 3-glycidoxypropyltriethoxysilane, 3-glycidoxypropyl(methyl)-dimethoxysilane, etc.; a 2-(3,4-epoxycyclohexyl)ethyl group-containing alkoxysilane such as 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, etc.; an alkenylalkoxysilane such as vinyltrimethoxysilane, vinyltriethoxysilane, vinyltris(2-methoxyethoxy)silane, methylvinyldimethoxysilane, allyltrimethoxysilane, allyltriethoxysilane, methylallyldimethoxysilane, etc.; a (meth)acryloxypropylalkoxysilane such as 3-acryloxypropyltrimethoxysilane, 3-acryloxypropyltriethoxysilane, 3-acryl-oxypropyl(methyl)dimethoxysilane, 3-methacryloxypropyltrimethoxysilane, 3-methacryloxypropyltriethoxysilane, 3-methacryloxypropyl(methyl)dimethoxysilane, etc.; an organosilane compound having a hydrogen atom bonded to a silicon atom, and a side chain represented by the following formula (III):

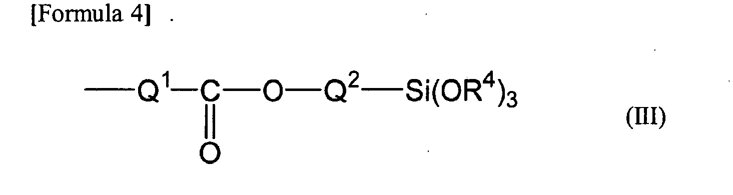

(wherein Q¹ represents a linear or branched alkylene group which forms a carbon chain having 2 or more carbon atoms between a silicon atom and an ester bond; Q² represents a linear or branched alkylene group which forms a carbon chain having 3 or more carbon atoms between an oxygen atom and a silicon atom at the side chain; R⁴ represents an unsubstituted or substituted alkyl group having 1 to 6 carbon atoms) which is bonded to a silicon atom; an aluminum alkoxide such as aluminum triethoxide, aluminum tripropoxide, aluminum tributoxide, etc.; a titanium alkoxide such as titanium tetraethoxide, titanium tetrapropoxide, titanium tetraisopropoxide, titanium tetrabutoxide, titanium tetraisobutoxide, titanium tetraisopropenyloxide, etc.; zirconium alkoxide such as zirconium tetraisopropoxide, zirconium tetrabutoxide, etc.; a polar group-containing organic compound such as diallyl maleate, triallylisocyanate, etc.

In the side chain represented by the above-mentioned formula (III), as Q¹, there may be mentioned an alkylene group such as ethylene, trimethylene, 2-methylethylene, tetramethylene, etc., and preferably an ethylene group and 2-methylethylene group since they are easy in synthesis and handling. As Q², there may be exemplified by an alkylene group such as trimethylene, 2-methyltrimethylene, tetramethylene, etc., and preferably a trimethylene group since they are easy in synthesis and handling. As R⁴, there may be mentioned an alkyl group such as methyl, ethyl, propyl, isopropyl, butyl, etc.; and an alkyl group substituted by an alkoxy such as 2-methoxyethyl, etc. Since the product has good adhesiveness, and an alcohol generated by hydrolysis is easily volatiled so that a methyl group and an ethyl group are preferred, and particularly preferably a methyl group. As the organosilane compound having such a side chain, there may be exemplified by a cyclic siloxane compound represented by the formula (IV):

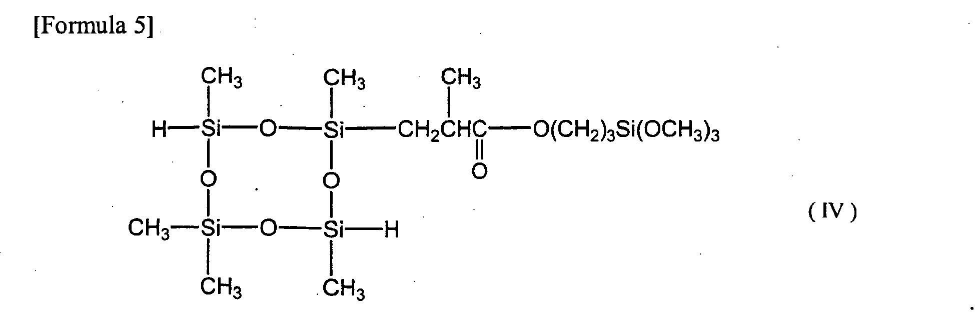

A formulation amount of the adhesiveness-imparting agent may vary depending on a kind of the adhesiveness-imparting agent and a substrate, and it is generally in the range of 0.5 to 20 parts by weight based on 100 parts by weight of Component (A) particularly in the viewpoint of adhesiveness, preferably 1 to 20 parts by weight, more preferably 2 to 15 parts by weight.

A curing controller may be added to improve preservability or workability of the sealing agent for a display element of the present invention. The above-mentioned diallyl maleate is effective not only as an adhesiveness-imparting agent but also as a curing controller. As the other curing controller, there may be exemplified by an acetylene alcohol such as 3-methyl-1-butyn-3-ol, 3-methyl-1-pentyn-3-ol, 3,5-dimethyl-1-hexyn-3-ol, 1-ethynyl-1-cyclohexan-1-ol, etc.

The sealing agent for a display element of the present invention forms a cured product having low moisture permeability by curing, an inorganic filler may be added in addition to Component (D) for the purpose of providing suitable fluidity at the stage before curing and providing high mechanical strength, which is required depending on the uses, to the rubbery elastomer obtained by curing. As the inorganic filler, there may be mentioned a reinforcing filler having an average particle size of less than 0.1 µm and a specific surface area of 30 mm²/g or more; and a non-reinforcing filler having an average particle size of 0.1 to 50 µm. As the reinforcing filler, there may be exemplified by a dry process silica such as fumed silica, and a wet process silica such as precipitated silica. These materials may be used as such, or may be carried out a surface treatment with a hydrophobidizing agent such as hexamethyldisilazane. As the non-reinforcing filler, there may be exemplified by diatomaceous earth, crushed quartz, fused quartz, titanium oxide, aluminum oxide, zinc oxide, alumino silicate, calcium carbonate, organic acid-surface treated calcium carbonate, magnesium carbonate, zinc carbonate, calcium silicate, talc, ferric oxide, etc., and they are selected depending on extrusion operatability and required physical properties of a rubbery elastomer obtained by curing. Also, depending on the purposes, a conductive filler such as carbon black may be formulated.

Moreover, to the sealing agent for a display element of the present invention, various kinds of additives such as a pigment, a thixotropy-providing agent, viscosity controller for improving an extrusion operability, UV absorber, mildewproofing agent, heat resistance improver, flame retardant, chain extender, etc., may be added depending on the purposes. As the chain extender, there may be mentioned a linear hydrogen polyorganosiloxane having each one hydrogen atom bonded to the silicon atom at the each end (for example, a linear polymethylsiloxane both ends of which are sealed with a M^{H} unit: (CH₃)₂HSiO_{1/2}-, an intermediate unit being constituted by a D unit: - (CH₃)₂SiO-). Also, in some cases, it may be a sealing agent for a display element in the form of dissolving or dispersing in an organic solvent such as toluene, xylene and the like.

The sealing agent for a display element of the present invention can be prepared by uniformly mixing and kneading Components (A) to (D), and other components to be formulated depending on necessity using a mixing means such as a universal mixing and kneading machine, kneader and so on. Also, to preserve the material stably for a long period of time, two pre-formulated materials are optionally prepared so as to contain Component (B) and Component (C) in separate pre-formulated materials and preserved, and immediately before use, they are uniformly mixed by a mixing means such as a mixing head of a quantitative mixer to prepare a sealing agent for a display element, and after defoaming under reduced pressure, the agent may be used.

A method of use of the sealing agent for a display element of the present invention is not particularly limited, and the agent can be used for the manufacture of a flat display device. For example, when a liquid crystal display device is manufactured by the dropping technique, after the sealing agent for a display element of the present invention is coated to circumference of a TFT substrate by the screen printing, dispenser, etc. in a frame shape, a predetermined amount of a liquid crystal is added by dropping in the frame, then, a CF substrate is laminated and cured by heating to prepare a liquid crystal display device. Or else, the sealing agent for a display element of the present invention is coated to either one of a TFT substrate or a CF substrate by screen printing, dispenser, etc., except for a liquid crystal inlet port, interposing a spacer therebetween, the other substrate is laminated at the opposed position. Thereafter curing under heating is carried out, then, a liquid crystal is injected from the liquid crystal inlet port, and finally the liquid crystal inlet port is sealed by using a sealant to prepare a liquid crystal display device. In this case, the sealing agent for a display element of the present invention may be used as a sealant.

Also, the sealing agent for a display element of the present invention can be used for the manufacture of an EL element such as an organic EL element, etc. For example, when an organic EL element having a shape in which a substrate on which an organic EL diode is formed being covered by a metal lid is to be manufactured, the sealing agent for a display element of the present invention is coated to an edge of the metal lid by a dispenser, etc., then, the metal lid is laminated so as to cover the diode portion of the substrate on which the organic EL diode has been formed, curing under heating is carried out to prepare an organic EL element.

Incidentally, the curing conditions under heating of the sealing agent for a display element of the present invention can be optionally set between room temperature and 250°C depending on kinds and amounts to be added of Component (C) and reaction controller. In the manufacture of a flat display device, it is preferably set to 100°C or lower to avoid damage by heat, more preferably 90°C or lower, further preferably 80°C or lower. A heating time may be preferably made 120 minutes or shorter, more preferably 60 minutes or shorter, further preferably 30 minutes or shorter. However, the curing conditions may be optionally adjusted depending on a size of parts or an ability of a heating furnace.

### EXAMPLES

In the following, the present invention will be explained in more detail by referring to Examples and Comparative examples. In these examples, all the part means parts by weight, and the viscosity means a viscosity at 23°C. The present invention is not limited by these Examples.

In Examples and Comparative examples, the below mentioned polysiloxanes were used as Components (A) and (B). In the following, siloxane units are shown with the following symbols. In the unit formula, an intermediate siloxane unit simply means a number of unit(s), and when a plural kinds of intermediate siloxane units are contained, these intermediate siloxane units are arranged randomly.
M^{H} unit: (CH₃)₂HSiO_{1/2}-
M^{V} unit: (CH₃)₂(CH₂=CH)SiO_{1/2}-
D unit: -(CH₃)₂SiO-
D^{ff} unit: -(C₆H₅)₂SiO-
Q unit : SiO_{4/2} (4 functionals)
A-1: A linear polymethylvinylsiloxane both ends of which are sealed with M^{V} unit, an intermediate unit being a D unit, and having a viscosity at 23°C of 3 Pa·s;
A-2: A linear polymethylvinylphenylsiloxane both ends of which are sealed with M^{V} unit, an intermediate unit being 95 mol% of a D unit and 5 mol% of a D^{ff} unit, and having a viscosity of 3 Pa·s;
A-3: A linear polymethylvinylphenylsiloxane both ends of which are sealed with M^{V} unit, an intermediate unit being 70 mol% of a D unit and 30 mol% of a D^{ff} unit, and having a viscosity of 3 Pa·s;
A-4: A linear polymethylvinylphenylsiloxane both ends of which are sealed with M^{V} unit, an intermediate unit being 60 mol% of a D unit and 40 mol% of a D^{ff} unit, and having a viscosity of 3 Pa·s;
B-1: A branched polymethylhydrogen siloxane represented by the unit formula M^{H}₈Q₄ and having a viscosity of 0.02 Pa·s;

In Example and Comparative example, as Component (C), the following mentioned platinum complex was used.
C-1: chloroplatinic acid-vinyltetramer complex (2% by weight in terms of platinum atom).

In Examples and Comparative examples, the following mentioned filling agent were used.
D-1: White mica powder having an average particle size of 5 µm
D-2: White mica powder having an average particle size of 22 µm
D-3: White mica powder having an average particle size of 55 µm
D-4: Quartz powder having an average particle size of 2 µm

As a curing controller, the following was used.
E-1: 1-Ethynyl-1-cyclohexanol

As the adhesiveness-imparting agent, the following were used.
F-1: A compound of the formula (IV): 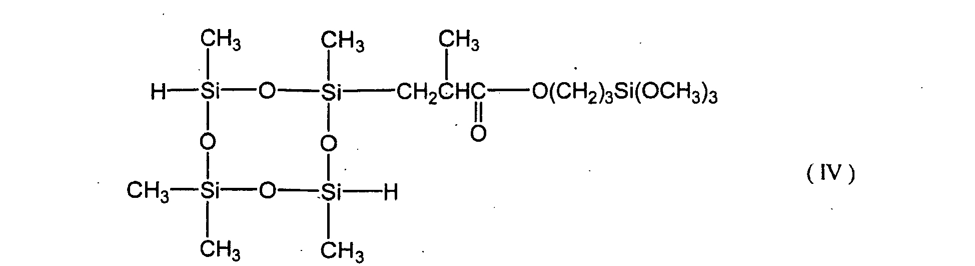
F-2: 3-Glycidoxypropyltrimethoxysilane

Examples 1 to 9 and Comparative examples 1 and 2

### (Preparation of pre-formulated material I)

In an apparatus equipped with a stirring device were formulated a half amount of A-1 to A-4 shown in Table 1 and a half amount of D-1 to D-4 shown in Table 1, then, whole amounts of C-1 and E-1 shown in Table 1 were added to the mixture, and the resulting mixture was mixed until the mixture became uniform to prepare a pre-formulated material I.

### (Preparation of pre-formulated material II)

In a similar apparatus were formulated the reminder amount of A-1 to A-4, whole amount of B-1 shown in Table 1, the reminder amount of D-1 to D-4, and whole amount of F-1 to F-2 shown in Table 1, and the resulting mixture was mixed until the mixture became uniform to prepare a pre-formulated material II.

### (Preparation of composition and preparation of silicone rubber sheet)

Two apparatuses of quantitative mixers were each charged the pre-formulated material I and pre-formulated material II, respectively, and equivalent amounts of the both pre-formulated materials were supplied to a mixing head, mixed uniformly, and defoamed under reduced pressure to prepare a formulation. Then, the formulation was injected into a mold made of stainless steel on the surface of which has been subjected to polytetrafluoroethylene treatment, heated at 80°C for 30 minutes to cure the material, whereby silicone rubber sheets having a thickness of 1.0 mm and 2.0 mm were prepared.

By using silicone rubber sheets (a thickness of 1.0 mm) of Examples 1 to 9, and Comparative examples 1 and 2, moisture permeability at a temperature of 40°C and a humidity of 90% RH for 24 hours was evaluated according to JIS Z0208. With regard to Examples 6 to 8, after the samples were allowing to stand at 150°C for 1,000 hours, measurement was carried out in the same manner. The measured results are shown in Table 1.

Also, with regard to silicone rubber sheets (a thickness of 2.0 mm) of Examples 6 to 8, measurement on hardness (Type A Durometer), tensile strength and elongation at breakage were carried out according to JIS K6249. After the samples were allowing to stand at 150°C for 1,000 hours, measurement was carried out in the same manner. The measured results are shown in Table 1.

Moreover, by using the compositions of Examples 6 to 8, measurement of shear adhesion strength was carried out according to JIS K6249. The tests were carried out with a material to be adhered of glass (80 mm x 25 mm x 5 mm), an adhesion thickness of 1 mm and a tensile rate of 10 mm/min, and a tensile strength at breakage was measured. The measured results are shown in Table 1.

**[Table 1]**

| | Comparative example | | Example | | | | | | | | |
|---|---|---|---|---|---|---|---|---|---|---|---|
| | 1 | 2 | 1 | 2 | 3 | 4 | 5 | 6 | 7 | 8 | 9 |
| A-1 | 50 | 50 | 50 | | | | | | | | |
| A-2 | | | | 50 | | | | | | | |
| A-3 | | | | | 50 | | | | | | |
| A-4 | | | | | | 50 | 50 | 50 | 50 | 50 | 50 |
| B-1 | 0.63 | 0.63 | 0.63 | 0.77 | 1.6 | 3.5 | 3.5 | 3.5 | 3.5 | 3.5 | 3.5 |
| C-1 | 0.03 | 0.03 | 0.03 | 0.03 | 0.03 | 0.03 | 0.03 | 0.03 | 0.03 | 0.03 | 0.03 |
| D-1 | | | | | | | | 40 | | | |
| D-2 | | | 40 | 40 | 40 | 20 | 30 | | 40 | | 50 |
| D-3 | | | | | | | | | | 40 | |
| D-4 | | 40 | | | | | | | | | |
| E-1 | 0.1 | 0.1 | 0.1 | 0.1 | 0.1 | 0.1 | 0.1 | 0.1 | 0.1 | 0.1 | 0.1 |
| F-1 | 3.0 | 3.0 | 3.0 | 3.0 | 3.0 | 3.0 | 3.0 | 3.0 | 3.0 | 3.0 | 3.0 |
| F-2 | 1.0 | 1.0 | 1.0 | 1.0 | 1.0 | 1.0 | 1.0 | 1.0 | 1.0 | 1.0 | 1.0 |
| Ph/R² [mol%] | 0 | 0 | 0 | 5 | 30 | 40 | 40 | 40 | 40 | 40 | 40 |
| H/Vi | 2.6 | 2.6 | 2.6 | 2.1 | 1.9 | 1.4 | 1.4 | 1.4 | 1.4 | 1.4 | 1.4 |
| Curing condi- | | | | | | | | | | | |
| tions 80°C, 30 | | | | | | | | | | | |
| min | | | | | | | | | | | |
| Hardness | | | | | | | | 78 | 77 | 78 | |
| (Type A) | | | | | | | | | | | |
| Tensile | | | | | | | | 6 | 5.2 | 4.5 | |
| strength [MPa] | | | | | | | | | | | |
| Elongation [%] | | | | | | | | 20 | 15 | 15 | |
| Shear | | | | | | | | | | | |
| adhesion | | | | | | | | 1.5 | 1.3 | 1.2 | |
| strength [MPa] | | | | | | | | | | | |
| Moisture | | | | | | | | | | | |
| permeability | 100 | 80 | 27 | 22 | 11 | 16 | 12 | 11 | 7 | 5 | 6 |
| [g/m²·24h] | | | | | | | | | | | |
| After allowing | | | | | | | | | | | |
| to stand at | | | | | | | | | | | |
| 150°C for | | | | | | | | | | | |
| 1,000 hours | | | | | | | | | | | |
| Hardness | | | | | | | | 84 | 83 | 83 | |
| (Type A) | | | | | | | | | | | |
| Tensile | | | | | | | | 7.8 | 6.5 | 5 | |
| strength [MPa] | | | | | | | | | | | |
| Elongation [%] | | . | | | | | | 10 | 7 | 5 | |
| Shear | | | | | | | | | | | |
| adhesion | | | | | | | | 1.7 | 1.5 | 1.4 | |
| strength [MPa] | | | | | | | | | | | |
| Moisture | | | | | | | | | | | |
| permeability | | | | | | | | 10 | 6 | 5 | |
| [g/m²·24h] | | | | | | | | | | | |

| | | | | | | | | | | | |
|---|---|---|---|---|---|---|---|---|---|---|---|
| *Ph/R² means a ratio of a phenyl group of R² in A-1 to A-4 *H/Vi means a number of hydrogen atoms bonded to silicon in B-1 relative to one vinyl group in A-1 to A-4 | | | | | | | | | | | |

As shown in Table 1, Examples 1 to 9 showed excellent low moisture permeability, particularly in Examples 3 to 9 where a ratio of a phenyl group of R² is 15% or more, moisture permeability was excellent as 20 or lower. From Examples 6 to 8, it can be understood that the cured products have suitable elasticity and good adhesive force, and these characteristics were maintained after allowing to stand in a circumstance at 150°C for 1,000 hours, so that they have durability.

### UTILIZABILITY IN INDUSTRY

The sealing agent for a display element of the present invention cures within a short period of time and shows not only good elasticity, adhesiveness and durability which are characteristic features of the polyorganosiloxane, but also low moisture permeability, so that it can be complied with diversification of display functions and high reliability, and particularly useful in the manufacture of a liquid crystal display device.

## Claims

1. A sealing agent for a display element which comprises
(A) 100 parts by weight of a linear polyorganosiloxane represented by the formula (I): 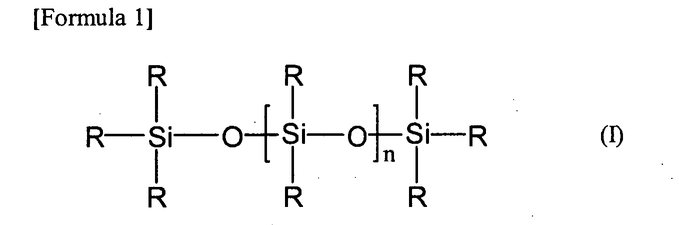 (wherein
Rs independently represent R¹ or R², and among Rs, at least two of which are R¹s,
R¹s independently represent a C₂-C₆ alkenyl group,
R²s independently represent a C₁-C₆ alkyl group or a phenyl group, and
n is a number which makes a viscosity of (A) at 23°C 0.1 to 1,000 Pa·s);
(B) a polyorganohydrogen siloxane having hydrogen atoms bonded to a silicon atom in a number of exceeding 2 in the molecule in an amount where a number of hydrogen atoms bonded to a silicon atom per one alkenyl group existing in (A) being 0.5 to 10.0;
(C) a compound of a platinum group metal in an amount where a platinum group metal atom being contained with 0.1 to 1,000 ppm by weight based on the amount of (A); and
(D) 20 to 200 parts by weight of mica powder.

2. The sealing agent for a display element according to Claim 1, wherein R¹ of (A) is a vinyl group.

3. The sealing agent for a display element according to Claim 1 or 2, wherein among R² of (A), 15 mol% or more is a phenyl.

4. The sealing agent for a display element according to any one of Claims 1 to 3, wherein R² of (A) is a methyl group or a phenyl group, and among R², 15 mol% or more is a phenyl group.

5. The sealing agent for a display element according to any one of Claims 1 to 4, wherein an average particle size of (D) is 2.0 to 100 µm.

6. The sealing agent for a display element according to any one of Claims 1 to 5, wherein it is for a liquid crystal display device.

7. A flat display device sealed by the sealing agent for a display element according to any one of Claims 1 to 5.
